# EUROPEAN PATENT APPLICATION

(11) **EP 3 973 758 A1**
(43) Date of publication of application: **30.03.2022**
(21) Application number: 21197911.7
(22) Date of filing: 21.09.2021
(51) Int. Cl.: A01B 69/04

(54) **AGRICULTURAL MACHINERY AUTOMATIC TURNING METHOD AND AGRICULTURAL MACHINERY AUTOMATIC TURNING SYSTEM**

(30) Priority: 25.09.2020 CN 202011023261
(71) Applicant: FJ Dynamics Co., Ltd., Shenzhen, Guangdong 518000 (CN)
(72) Inventor: SHEN, WEI, Shenzhen, 518000 (CN); MA, ZHU LIN, Shenzhen, 518000 (CN); WANG, JIA BIN, Shenzhen, 518000 (CN); YAO, YUAN, Jiangsu, 210001 (CN); WU, DI, Jiangsu, 210001 (CN)
(74) Representative: Zaboliene, Reda

(57) **Abstract**

A method for automatically turning an agricultural machinery to follow a set route in a defined work area when carrying out a farming procedure in a field controls the machine to decelerate and change direction when a turn round command is received. The work area includes at least two work channels, the agricultural machinery reaching the straight-line end of one work channel is turned to enter the next work channels. The agricultural machine is slowed down to a speed set for safe turning, any working equipment is retracted, and the agricultural machinery is turned round into new work channel. The working equipment is released again, and the agricultural machine continues its farming procedure along the new work channel. A system for such automatic turning and applications are also disclosed.

## Description

### FIELD

The subject matter relates to relates to automatic control of agricultural machinery, in particular to an automatic steering system for agricultural machinery, and applications.

### BACKGROUND

Autonomous driving is possible in agriculture. At present, completely unmanned driving is still not achieved. Intelligent driving function mainly appears as an auxiliary function only. Most agricultural machinery currently adopts straight-line movement mode, but the area of farmland is limited, and the agricultural machinery needs to turn around after traversing a certain distance. The turning around of agricultural machinery is a difficult action, generally performed manually by a specialized operator to control the agricultural machinery at the edges of fields.

The turning around of agricultural machinery is not the same as the ordinary steering. When an obstacle is encountered in the line of advance of the agricultural machinery, the obstacle can be easily passed by slight movement of the steering wheel, this is more complicated in terms of steering.

There is a room for improvement.

### SUMMARY

A purpose of the present disclosure provides a method for automatic turning or steering applied to agricultural machinery. By the method, an agricultural machine can be automatically turned in one defined working area.

Another purpose of the present disclosure is to present a system for automatic planning of a path of the machine according to the surrounding environment to create conditions for automatic turning.

The agricultural machinery automatic turning system can automatically determine whether the machine needs to be turned.

In the system, the farmer or user of agricultural machinery can observe the working path of the agricultural machine through a terminal device and can control the agricultural machine in real time.

According to one aspect of the present disclosure, the automatic turning method includes: controlling the agricultural machinery to decelerate through a deceleration command when receiving a definite turn round command; wherein the agricultural machinery is located in a work channel of a defined work area, the work area includes at least two of the work channels, and the agricultural machinery traveling along one of the work channels needs to be turned to enter the next work channel. A steering command is issued to the agricultural machinery when the agricultural machinery decelerates to a set value; and the agricultural machinery is reversed to turn the agricultural machinery into new work channel, the agricultural machinery continuing to operate along the new work channel.

According to an embodiment of the present disclosure, the method further includes: controlling lifting of cutters or other working equipment of the agricultural machinery during turning process, and controlling the working equipment to drop and reset when the agricultural machinery enters the new work channel.

According to an embodiment of the present disclosure, the method further includes: issuing an acceleration command to the agricultural machine and controlling the agricultural machinery to accelerate and steer when the agricultural machinery is turned to a set angle.

According to an embodiment of the present disclosure, each work channel of the agricultural machinery is determined by two working positions and two ends in the defined work area.

According to an embodiment of the present disclosure, the method further includes: determining the two working positions according to a straight line route in the work area, and determining course of the work channel; controlling the agricultural machinery to move along to the end of the current work channel and turn to move along to the end of the next work channel, determining the end of such next work channel, and determining the work channel.

According to an embodiment of the present disclosure, the work channel being determined by an operator manually determining the two working positions and the two ends of each channel.

According to an embodiment of the present disclosure, the method further includes: generating a definite turn round command by acquiring position change of the agricultural machinery.

According to another aspect of the present disclosure, the automatic turning system includes a receiving unit which receives external information from an agricultural machinery and internal information of the agricultural machinery; a processing unit, wherein the processing unit generates a determination according to the external information and the internal information, and the determination comprises a movement speed and a speed of steering, and a controlling unit, wherein the controlling unit is used to control the movement speed and the steering speed of the agricultural machinery according to the determination, to steer the agricultural machinery at an end of a work channel in a work area, and move to the next work channel.

According to an embodiment of the present disclosure, the receiving unit receives a turn around command and the processing unit issues a deceleration command to slow down to a set value, and then issue one or more steering commands to the controlling unit to change driving direction of the agricultural machinery to one or more set directions.

According to an embodiment of the present disclosure, when the agricultural machinery is controlled by the controlling unit to turn, the processing unit is configured to issue an acceleration command to the controlling unit to accelerate the steering of the agricultural machinery.

According to an embodiment of the present disclosure, the automatic turning system further comprises a path planning unit, the path planning unit is communicably connected to the receiving unit; the path planning unit determines the work channel according to the two working positions of a straight-line path of the agricultural machinery in the work area and two ends in the work area.

According to an embodiment of the present disclosure, the receiving unit is integrated in a terminal device, and the terminal device is used by an operator to operate the agricultural machinery.

According to another aspect of the present disclosure, a terminal device is disclosed, the terminal device includes at least one receiving unit, and a processing unit; wherein the receiving unit is used to receive external information from an agricultural machinery and internal information of the agricultural machinery; wherein the processing unit generates a determination according to the external information and the internal information, and the determination comprises a movement speed of agricultural machinery and a speed of steering of agricultural machinery; the processing unit transmits the determination to a controlling unit, the controlling unit is used to control the movement speed and the steering speed of the agricultural machinery accordingly, to complete the steering at an end of a work channel in a work area, to move to the next work channel.

According to an embodiment of the present disclosure, when the receiving unit receives a turn around command, the processing unit is configured to issue a deceleration command to the controlling unit to slow down the speed of the agricultural machinery to a set value, and then issue a steering command to the controlling unit to change driving direction of the agricultural machinery to a set reverse or other direction.

According to an embodiment of the present disclosure, when the agricultural machinery is controlled by the controlling unit to turn, the processing unit is configured to issue an acceleration command to the controlling unit to accelerate the steering of the agricultural machinery.

According to an embodiment of the present disclosure, the terminal device further comprises a path planning unit, the path planning unit is communicably connected to the receiving unit; the path planning unit determines the work channel according to the two working positions of a straight-line route of the agricultural machinery in the work area and two ends in the work area.

According to an embodiment of the present disclosure, the terminal device further comprises a display unit, the display unit is part of the receiving unit, and is used to receive commands from an operator.

According to another aspect of the present disclosure, an agricultural machinery with automatic turning system is presented, the agricultural machinery includes a main body and an agricultural machinery automatic turning system; wherein the main body comprises a walking unit, a driving unit, a steering unit, one or more items of working equipment such as cutters, and a controlling unit; the working equipment and the walking unit are respectively connected to the driving unit; the steering unit, the walking unit, the driving unit, and the working equipment are connected to and controlled by the controlling unit; wherein the agricultural machinery automatic turning system comprises a receiving unit and a processing unit; wherein the receiving unit is used to receive external information from an agricultural machinery and internal information of the agricultural machinery; wherein the processing unit generates a determination according to the external information and the internal information, and the determination comprises a movement speed of agricultural machinery and a steering speed of agricultural machinery; the processing unit transmits the determination to a controlling unit, the controlling unit is used to control the movement speed and the steering speed of the agricultural machinery according to the determination, to make the agricultural machinery complete the steering at an end of a work channel in a work area, to move to the next work channel.

### BRIEF DESCRIPTION OF THE DRAWINGS

FIGS. 1-7 are schematic diagrams illustrating an environment and operations of an agricultural machinery automatic turning method according to an embodiment of the present disclosure.
FIG. 8 is a schematic flowchart of the agricultural machinery automatic turning method according to an embodiment of the present disclosure.
FIG. 9 is schematic diagram of an agricultural machinery automatic turning system according to an embodiment of the present disclosure.
FIG. 10 is a schematic diagram of an agricultural machine with the agricultural machine automatic turning system according to an embodiment of the present disclosure.

### DETAILED DESCRIPTION

The following description is to enable those skilled in the art to implement the present disclosure. The preferred embodiments in the following description are only examples, and those skilled in the art can think of variations. The basic principles of the present disclosure defined in the following description can be applied to other embodiments, modifications, improvements, equivalents, and other technical solutions that do not deviate from the spirit and scope of the present disclosure.

Those skilled in the art should understand that, in the disclosure of the present disclosure, an orientation or a positional relationship indicated by the terms "longitudinal", "lateral", "upper", "lower", "front", "rear", "left", "right", "vertical", "horizontal", "top", "bottom", "inner", "outer", etc. is based on the orientation or the positional relationship shown in the drawings, which is only for the convenience of describing the present disclosure and simplifying the description, rather than indicating or implying that a device or an element must have a specific orientation, or being constructed and operated in a specific orientation, so the above terms should not be understood as a limitation of the present disclosure.

It can be understood that the term "a" should be understood as "at least one" or "one or more", that is, in one embodiment, the number of a kind of element may be one, and in another embodiment, the number of the kind of element can be more than one, and the term "one" cannot be understood as a restriction on the number.

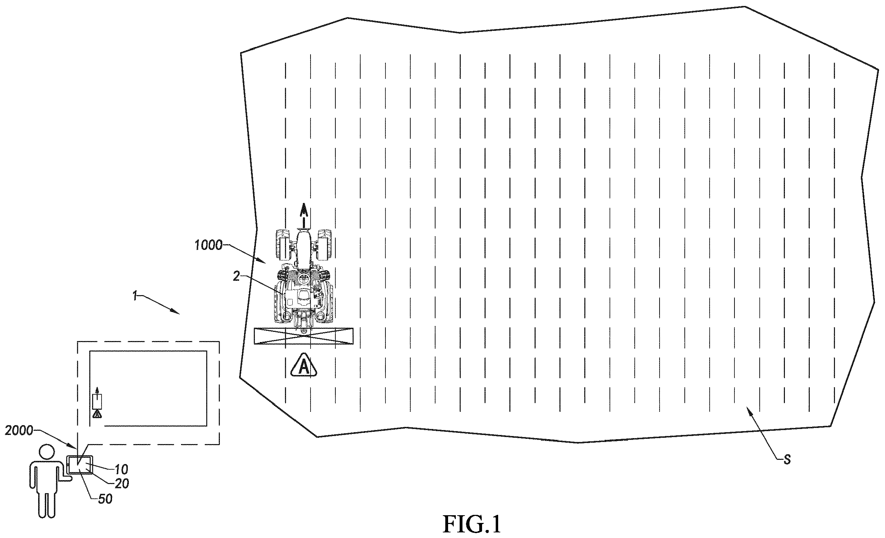

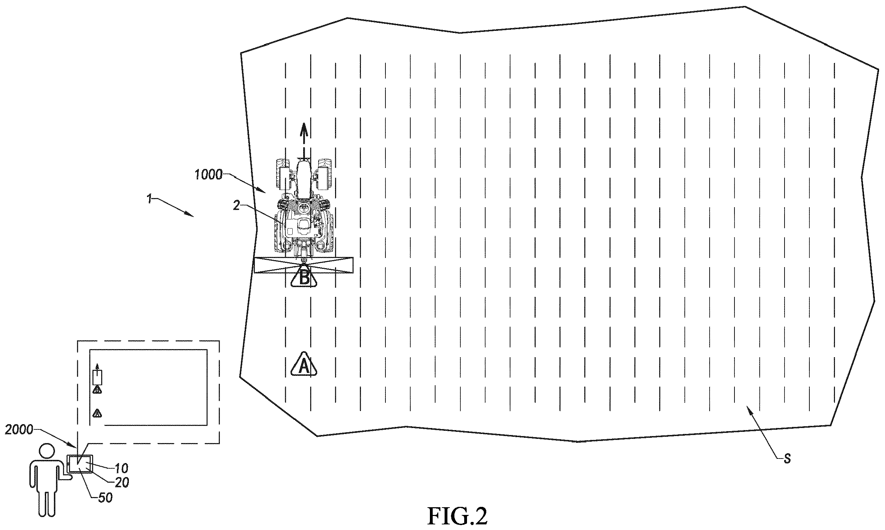

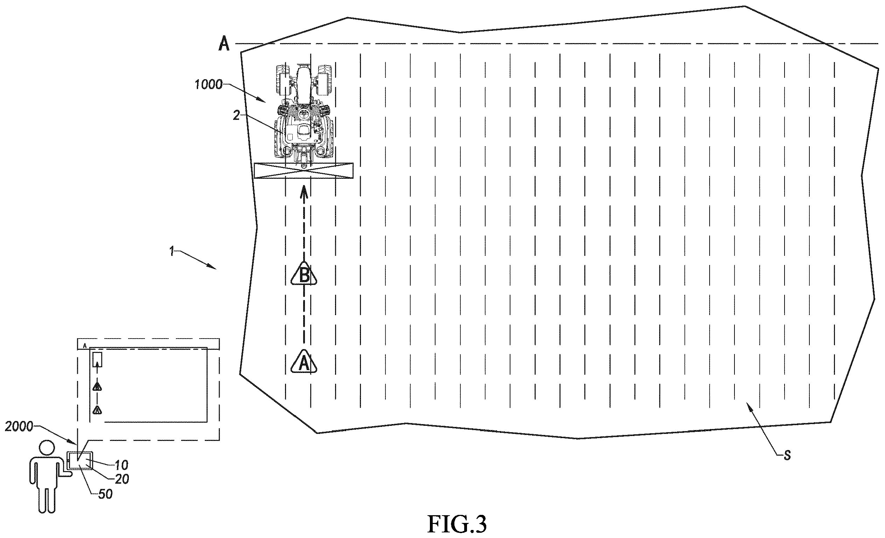

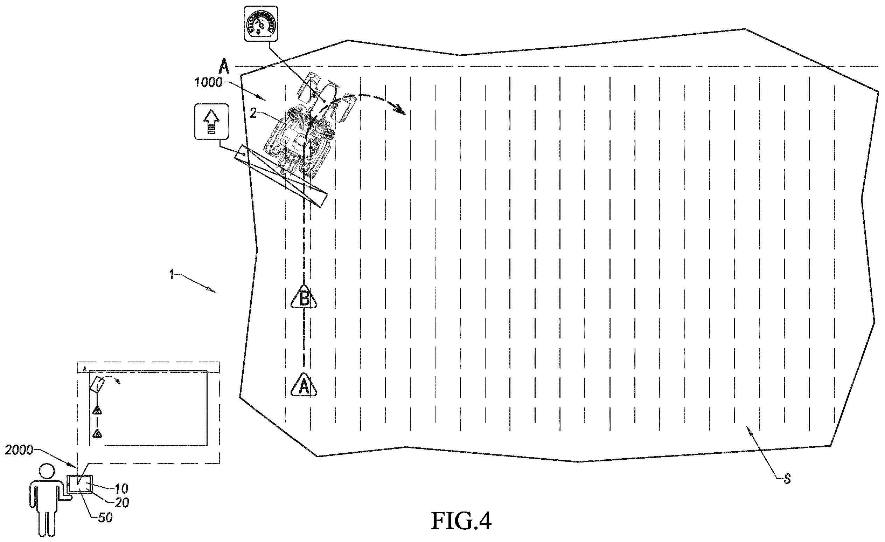

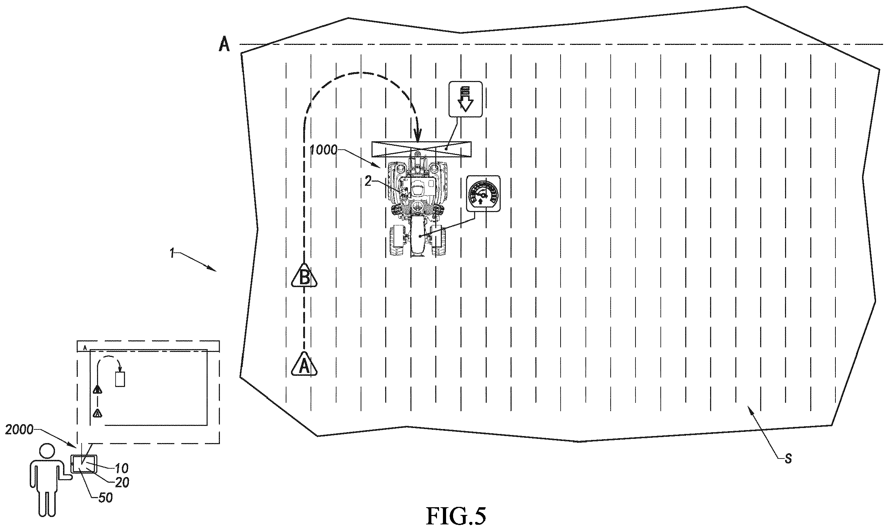

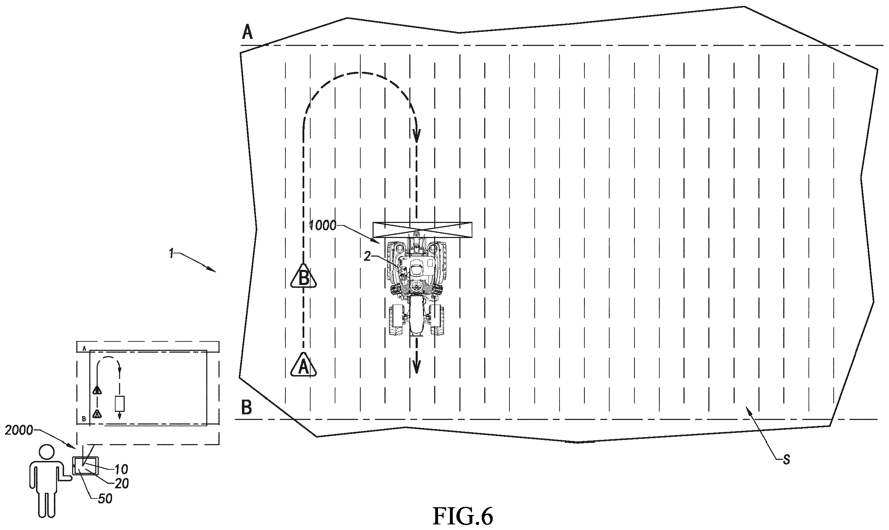

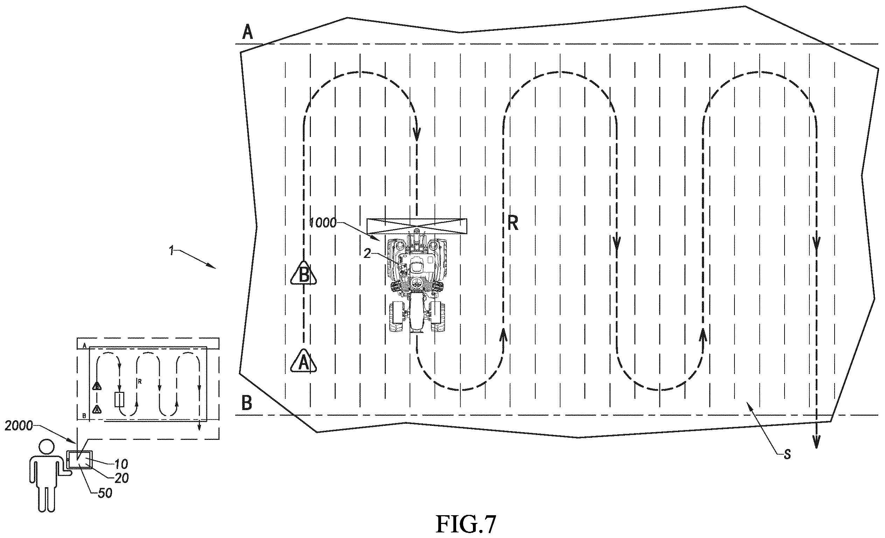

Referring to FIG. 1 to FIG. 7, an agricultural machinery automatic turning method according to an embodiment of the present disclosure is illustrated.

With the agricultural machinery automatic turning method, an agricultural machine can automatically reverse course in a defined work area s, to complete automatic driving in the work area s. Even if the agricultural machine is moved to another work area s for operation, the method is effective for an agricultural machine in another work area s.

In detail, the agricultural machinery automatic turning method may include the following blocks:

Determining a work path in the work area s; and,

Controlling the agricultural machinery to automatically reverse course at the end of the work area s to enter from one work channel R to the next work channel R.

In the embodiment, the following methods can be adopted to determine the work path in the work area s:

First, when the agricultural machinery enters the work area s for the first time and controls the agricultural machine to travel in a straight line, first determine a position A. Then, after the agricultural machinery travels forward in a straight line through position A for a certain distance, determine a position B. A straight line is determined by two points to determine a work channel R of the agricultural machinery in the work area s. It is understandable that, in this way, a plurality of the work channels R and the other straight-line work channels R can be automatically determined in the work area s.

When the agricultural machinery continues to travel in a straight line to one end of the work area s, that is the position of field head A. Then the agricultural machine can automatically turn round at the field head A, and continue to drive along the next work channel R to the other end of the work area s, and determine that the position is field head B. In this way, the work path of the agricultural machinery in the work area s can be determined.

It is understandable that the work path of the agricultural machinery in the work area s may be determined automatically or manually. For example, a satellite map can be used to determine the size and shape of the work area s, and then automatically plan the work path for the agricultural machinery. It may also be that the operator manually controls the agricultural machine to drive around the edge of the work area s to a certain starting point, and then use a preset program to automatically plan the work path for the agricultural machinery.

In the embodiment, the agricultural machinery automatically travels in the work area s, and the operator can know the position of the agricultural machinery in the work area s through a terminal device. As the agricultural machinery travels in the work area s, the coordinates of the agricultural machine are acquired in real time and displayed on the terminal device. The operator can set a dot on the displayed path of the agricultural machinery to indicate the A position, and another dot a certain distance from the A position to reveal and confirm a channel R. For example, take a dot on a path with a distance of 5 meters from A to obtain the position B, so as to determine the straight-line work channel R of the agricultural machinery.

When the agricultural machinery travels to a position close to the edge of the work area, the operator can determine the field head A on the terminal device. The field head A is a straight line, which means that the agricultural machinery will make a turn round at the position of the field head A in a straight line regardless of whether it is on the work channel R or the next work channel R. The agricultural machinery makes a turn round at the position of the field head A, and then enters the next work channel R, and continues to drive in a straight line in the direction away from the field head A. When the agricultural machine travels to another edge position close to the work area, the operator can determine the field B on the terminal device. The field head B is a straight line, which means that the agricultural machinery will make a turn round at the position of the field head B in a straight line regardless of whether it is on the work channel R or the next work channel R.

It is worth noting that in the initial stage, the agricultural machinery can be controlled to move along an edge of the work area s, and the determination of the position of A can be after the agricultural machinery has moved for a period of time.

In other words, the position A can be the starting position of the work channel R or the non-end point of the work channel R. For the operator, the position A can be determined as soon as the agricultural machinery enters the work area s, or the position A can be determined after moving the agricultural machinery a certain distance.

It is understandable that the determination of each work channel R can also rely on a satellite map to automatically form a route plan for the agricultural machinery.

Further, the turning step further includes the following steps:

Controlling the agricultural machinery to decelerate to a predetermined value after receiving a turn round command;

Controlling the steering wheel of the agricultural machinery to rotate to a predetermined value.

Controlling the agricultural machinery to accelerate to a predetermined value until it enters another work channel R; and

Returning the steering wheel of the agricultural machinery to the straight-ahead position.

In detail, in the turn round step, if the agricultural machinery needs to make a turn round, and the agricultural machinery travels relatively fast at the beginning, it needs to slow down to make a safe turn round.

The turn round command may be received by a processor, such as an electronic control unit (ECU), which may make the agricultural machinery make a turn round by receiving a command from an operator, or it may be an automatic navigation system based on the agricultural machine Detected data, so as to automatically send commands to make a turn round. For example, the automatic navigation system of the agricultural machine determines that the agricultural machinery has traveled to the end of the work channel R. If the agricultural machinery does not turn round, the agricultural machinery would drive out of the work area s. For the operator, it is very convenient to control the timing of the agricultural machinery turning round by operating applications on the terminal device, and operator input is required if the agricultural machinery encounters obstacles or other emergencies that cannot be controlled, and can control the agricultural machinery to veer round such obstacles.

After the ECU receives the command, it can send a deceleration command to a controller, such as a vehicle controller (VCU), if the current speed of the agricultural machinery exceeds a preset value, the VCU is used to control a walking unit of the agricultural machinery to decelerate or accelerate. The VCU can control the accelerator pedal motor of the agricultural machinery to rotate to a set value, so that the agricultural machinery decelerates. If the speed of the agricultural machinery is reduced to a predetermined value, after the ECU receives the feedback, a command to lift or retract a working equipment can be sent to the VCU. If the speed of the agricultural machinery does not decrease to a predetermined value, the VCU continues to control the accelerator pedal motor of the agricultural machinery to rotate to the set value to decelerate the agricultural machinery.

The VCU can control the steering of the agricultural machinery to make a turn round while controlling the lifting or retraction of the working equipment of the agricultural machinery. If the steering wheel of the agricultural machinery rotates to the set value, it is fed back to the ECU, and the ECU can issue an acceleration command to the VCU. If the steering wheel of the agricultural machinery does not turn to the set value, the VCU continues to control the steering wheel to turn until the set value is reached.

The commands issued by the ECU are sent to the VCU, and the VCU controls the accelerator pedal motor of the agricultural machinery to rotate to a set value, so that the agricultural machinery starts to accelerate and turn around.

The ECU can be aware of the work channel R where the agricultural machinery is currently located according to the real-time position information of the agricultural machinery, and if the agricultural machinery has entered the next work channel R from the previous work channel R. The ECU issues a control command to the VCU, so that the VCU controls the steering wheel to return to straight-ahead, and the agricultural machinery can travel in a straight line along the new work channel R.

After the agricultural machinery reaches the new work channel R, the ECU will issue a command to the VCU to make the agricultural machinery stop carrying out its function. It is understandable that when the agricultural machinery is turning round, if the working equipment interferes with the turning around, the equipment can be lifted. For example, working equipment such as a plough may need to be lifted. If continuing to plough does not interfere with the entire turn round process, then the working department does not necessarily need to make adjustment. It is worth noting that the working equipment of the agricultural machinery does not necessarily need to be lifted, sometimes the control to stop the work can reduce the interference to the turning step.

It is understandable that when the VCU controls the steering of the agricultural machinery, it does not necessarily directly control the steering wheel of the agricultural machinery, but may also control the steering system of the agricultural machine internally. It can also simulate a real operator and use an external device to directly control the steering wheel of the agricultural machinery.

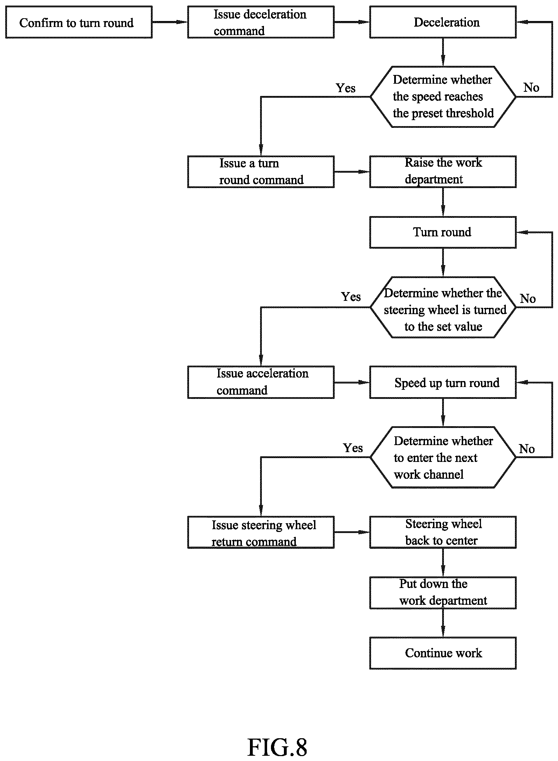

FIG. 8 illustrates a schematic diagram of an embodiment of the agricultural machinery turning method according to the present disclosure.

The agricultural machinery turning method can be implemented as, firstly, an APP of the terminal device making a determination as to turning round, and then sending a deceleration command to the ECU, the VCU performing specific operations accordingly.

In detail, the VCU controls the walking unit of the agricultural machinery to decelerate to reach a set value, and then feeds it back to the ECU. The ECU then issues a turn round command to the VCU. The VCU controls the lifting of the working department of the agricultural machinery, and then control the steering wheel to make a turn round until the steering wheel rotates to the set value, and then feedback to the ECU. The ECU then issues an acceleration command to the VCU, and the VCU controls the walking unit of the agricultural machinery to accelerate to a set value. During this process, the steering wheel keeps the angle of rotation and the working department is still in the raised state.

The ECU determines whether the agricultural machinery enters the next work channel R based on the relevant data of the work area s and the current position of the agricultural machinery. If the agricultural machinery enters the next work channel R, and stops the turn round.

The VCU can control the steering wheel of the agricultural machinery to return to its original position, so that the agricultural machinery can continue to drive in a straight line along the new work channel R. After the steering wheel of the agricultural machine is returned to the right, the working department of the agricultural machinery can also be controlled to return to the original position, so that the agricultural machinery can continue to work in the work area s.

If the agricultural machinery makes a turn round at the field head A and enters the next work channel R, it can make a turn round again at the field head B position of the new work channel R. In this way, the work for the entire work area s can be completed.

It is worth noting that the expected control speed and steering angle of the agricultural machinery in the turn round process can be determined, it can be determined based on the turn round command and the relevant parameters of the current agricultural machine and the work area s.

For example, if the width of a single work channel R in the work area s is relatively narrow, the agricultural machinery needs to control its steering angle to be smaller during the turn round process, otherwise it is easy to miss one work channel R. For example, the agricultural machinery was originally operating in the first work channel R, and it may directly enter the third work channel R due to excessive rotation when turning around. Therefore, the second work channel R between the first work channel R and the third work channel R is missed.

For example, if the size of the agricultural machine is large, and if the driving speed of the agricultural machinery is fast, the speed of the agricultural machinery needs to be controlled faster during the turn round process, and the speed of the agricultural machinery is lower when turning.

It is worth noting that the work channel R in the work area s is not necessarily linear, and the path of the work channel R can be selected or set according to requirements, for example, the path of the work channel R may be curved.

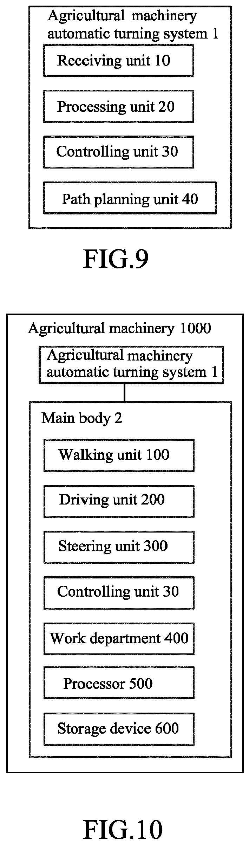

Referring to FIG. 9, according to another aspect of the present disclosure, the present disclosure provides an agricultural machinery automatic turning system 1, wherein the agricultural machinery automatic turning system 1 includes a receiving unit 10, a processing unit 20, and a controlling unit 30.

The receiving unit 10 is communicably connected to the processing unit 20, and the processing unit 20 is communicably connected to the controlling unit 30. The receiving unit 10 is configured to receive external information or internal information from the agricultural machinery, the processing unit 20 generates commands based on the information received by the receiving unit 10, and the controlling unit 30 is based on the commands generated by the processing unit 20 to control the agricultural machinery operation or walking.

In detail, when the agricultural machinery needs to turn round, the receiving unit 10 receives a turn round command and transmits it to the processing unit 20, and the processing unit 20 obtains a conclusion based on the information obtained by the receiving unit 10. The information includes the turn round command, the parameter information of the agricultural machine, and the parameter information of the work area s parameter information. The conclusion includes the operating speed of the agricultural machinery and the steering angle of the agricultural machine. The processing unit 20 sends the conclusion to the control unit 30. The control unit 30 controls the agricultural machinery according to the operating speed of the agricultural machinery and the steering angle of the agricultural machine, so that the agricultural machinery can smoothly make a turn round to proceed to the next work channel R.

It is worth noting that when the agricultural machinery is turning round, if the steering angle is too large, it may enter the unexpected work channel R. If the steering angle is too small, it may not be able to leave the current operation channel R. Therefore, it is impossible to operate in the new work channel R, so it is necessary to adjust the steering angle of the agricultural machine in a timely manner.

In this embodiment, the receiving unit 10 receives geographic location information about the agricultural machinery through a satellite positioning system in real time. If the heading of the agricultural machine does not enter the next work channel R during the turning process, then the agricultural machinery continues to turn so that the agricultural machinery can enter the next work channel R.

The processing unit 20 receives feedback from the receiving unit 10 in real time. The processing unit 20 may first issue a deceleration command to the controlling unit 30, and then after the agricultural machinery decelerates to a set value, the receiving unit 10 feeds back to the processing unit 20. The processing unit 20 may then issue a steering command and a lifting command of the working department to the controlling unit 30, so that the agricultural machinery can be controlled by the controlling unit to steer and keep the working department raised during the turning process. Then after the steering angle of the agricultural machinery reaches the set value, the receiving unit 10 feeds back to the controlling unit 30, so that the agricultural machinery can be controlled to accelerate the steering. When the agricultural machinery accelerates and turns to enter the next work channel R, the receiving unit 10 may feed back to the processing unit 20, and the processing unit 20 may then issue a positive command back to the controlling unit 30, so that the agricultural machinery can return to the walking unit under the control of the controlling unit 30. The processing unit 20 may also then issue operation commands to the controlling unit 30, so that the agricultural machinery can restart operation after entering the new work channel R.

The agricultural machinery automatic turning system 1 further includes a path planning unit 40 for planning the walking path of the agricultural machinery in the work area s, that is, the work channel R.

In an embodiment, the path planning unit 40 is not necessary, and the receiving unit 10 may obtain the relevant parameters of the work area s from a piece of historical data associated with the work area s, and the processing unit 20 can automatically plan the walking path. It may also be directly obtained from the historical database associated with the work area s, and the walking path formed by the other agricultural machinery walking in the work area s.

In this embodiment, the path planning unit 40 uses the information received by the receiving unit 10 to form the work area s and the work channel R of the agricultural machinery. The path planning unit 40 is communicably connected to the receiving unit 10 and the processing unit 20, respectively.

The receiving unit 10 may receive at least two spot positions and two head positions of the operator, and send them to the path planning unit 40, so that the path planning unit 40 can determine at least one work channel R. Then the width of the work channel R may be determined based on the size of the entire work area s and the operation range of the agricultural machinery, so as to determine a plurality of the work channels R in the operation area s

The receiving unit 10 may be installed in the agricultural machinery, the processing unit 20 may also be installed in the agricultural machine, or both the receiving unit 10 and the processing unit 20 may be independent of the agricultural machinery. For example, the receiving unit 10 and the processing unit 20 can respectively maintain a remote communication connection with the controlling unit 30, the receiving unit 10 and the processing unit 20 can be integrated into the terminal device, and the operator can use the terminal device sends a command to the agricultural machinery.

According to another aspect of the present disclosure, referring to FIG. 1 to FIG. 7, the present disclosure provides a terminal device 2000, wherein the terminal device 2000 is adapted to be communicably connected to the agricultural machinery.

The terminal device 2000 may include at least the receiving unit 10 and the processing unit 20. The receiving unit 10 is derived from the information of the agricultural machinery and the operation information of the operator. The processing unit 20 draws a conclusion based on the information received by the receiving unit 10, sends it to the controlling unit 30 of the agricultural machinery. The controlling unit 30 controls the walking unit, the steering unit, and the working department of the agricultural machinery to enable the agricultural machine to smoothly complete the steering.

The terminal device 2000 may further include a display unit 50, the receiving unit 10 and the processing unit 20 are communicably connected to the display unit 50, and the display unit 50 may display the information that the receiving unit 10 receives, can also display the commands currently issued by the processing unit 20.

The terminal device 2000 may be a terminal mobile device, such as a mobile phone or a tablet. The terminal device 2000 can control not only one agricultural machinery, but also multiple agricultural machines, and the types of agricultural machinery can be different. The agricultural machinery can be, but is not limited to, a lawn mower, planter, rice transplanter, and sprayer.

According to another aspect of the present disclosure, referring to FIGS. 1 to 7 and 9 and 10, the present disclosure provides the agricultural machinery 1000 with the agricultural machine automatic turning system 1. The agricultural machinery 1000 includes a main body 2 and the agricultural machine automatic turning system 1. The agricultural machine automatic turning system 1 is installed in the main body 2. The main body 2 includes a walking unit 100, a driving unit 200, a steering unit 300, a controlling unit 30, and a working department 400.

The walking unit 100 is used to drive the driving unit 200, the steering unit 300, the controlling unit 30, and the working department 400 to move, and the driving unit 200 is used to drive the walking unit 100, the steering unit 300 and the working department 400. The walking unit 100, the driving unit 200, the steering unit 300 and the working department 400 may be controllably connected to the controlling unit 30.

The agricultural machinery automatic turning system 1 may include the receiving unit 10, the processing unit 20 and the controlling unit 30. The receiving unit 10 is configured to receive external information from the agricultural machinery 1000 and internal information of the agricultural machinery 1000. The processing unit 20 generates a conclusion based on the information obtained by the receiving unit 10, and the conclusion includes the movement speed of the agricultural machinery and the steering angle of the agricultural machinery.

The controlling unit 30 controls the walking unit 100 and the steering unit 300 of the agricultural machinery 1000 based on the conclusion generated by the processing unit 20, so that the agricultural machinery 1000 completes the steering at the end of the work channel R in the work area s, so as to move to the next work channel R.

After the receiving unit 10 receives a definite turn round command, the processing unit 20 may be configured to: first issue a deceleration command to the controlling unit 30 to slow down the speed of the agricultural machinery 1000 to a set value, then issue a steering command to the control unit 30 to change the driving direction of the agricultural machinery 1000 to the set direction. When the agricultural machinery 1000 is controlled by the controlling unit 30 to turn, the processing unit 20 is configured to issue an acceleration command to the controlling unit 30 to accelerate the steering of the agricultural machinery 1000.

It is worth noting that the work channel R and the latter work channel R are not necessarily adjacent to each other, and they may be spaced apart.

For example, in the work area s, there are a total of five rows, of which the first row, the third row, and the fifth row have been planted with a plant. Now it is necessary to perform operations on the second and fourth rows, so the second row as the previous work channel R and the fourth row as the latter work channel R are separated from each other. The agricultural machinery 1000 can still complete the turn round from the second row to the fourth row under the guidance of the agricultural machinery automatic turning system 1.

The words "module" and "unit" as used herein, refers to logic embodied in hardware or firmware, or to a collection of software instructions, written in a programming language, such as, for example, Java, C, or assembly. One or more software instructions in the function modules may be embedded in firmware. It will be appreciated that the function modules may include connected logic modules, such as gates and flip-flops, and may include programmable modules, such as programmable gate arrays or processors. The function module described herein may be implemented as either software and/or hardware modules and may be stored in a storage device.

In one embodiment, the agricultural machinery 1000 further includes a storage device 600, and at least one processor 500. The at least one processor 500 is used to execute a plurality of modules (e.g., the receiving unit 10, a processing unit 20, and a controlling unit 30, and the path planning unit 40 shown in FIG. 9) and other applications. The storage device 600 stores the computerized instructions of the plurality of modules, and one or more programs, such as the applications of the farm management system. The storage device 600 can be any type of non-transitory computer-readable storage medium or other computer storage device, such as a hard disk drive, a compact disc, a digital video disc, a tape drive, a storage card (e.g., a memory stick, a smart media card, a compact flash card), or other suitable storage medium, for example.

Those skilled in the art should understand that the above description and the embodiments of the present disclosure shown in the drawings are only examples and do not limit the present disclosure. The function and principles of the present disclosure are explained in the embodiments, and without departing from the principle, the implementation of the present disclosure may have any deviation or modification.

## Claims

1. An agricultural machinery automatic turning method, comprising:
controlling the agricultural machinery to decelerate through a deceleration command to an agricultural machinery when receiving a definite turn round command; wherein the agricultural machinery is located in a work channel of a work area, the work area includes at least two of the work channels, and the agricultural machinery traveling along one of the work channels needs to be turned to enter the next work channel;
controlling steering of the agricultural machinery by a steering command to the agricultural machinery when the agricultural machinery decelerates to a set value; and
backing to the agricultural machinery when the agricultural machinery is turned into new work channel; wherein the agricultural machinery continues to operate along the new work channel.

2. The agricultural machinery automatic turning method of claim 1, further comprising:
controlling lifting of a working department of the agricultural machinery during turning process, and controlling the working department to reset when the agricultural machinery enters the new work channel.

3. The agricultural machinery automatic turning method of claim 1, further comprising:
issuing an acceleration command to the agricultural machine and controlling the agricultural machinery to accelerate and steer when the agricultural machinery is turned to a set angle.

4. The agricultural machinery automatic turning method of claim 1, wherein the work channel of the agricultural machinery is determined by two working positions and two ends in the work area.

5. The agricultural machinery automatic turning method of claim 4, further comprising:
determining the two working positions according to walking route of the agricultural machinery walking along a straight line in the work area, and to determining course of the work channel;
controlling the agricultural machinery to walk to one end of the work channel and turn to walk to the another end of another work channel, determining the end of the work channel, and determining the work channel.

6. The agricultural machinery automatic turning method of claim 4, wherein the work channel is determined by an operator manually determining the two working positions and the two ends.

7. The agricultural machinery automatic turning method of claim 4, further comprising:
generating a definite turn round command by acquiring position change of the agricultural machinery.

8. An agricultural machinery automatic turning system, comprising:
a receiving unit; wherein the receiving unit is used to receive external information from an agricultural machinery and internal information of the agricultural machinery;
a processing unit, wherein the processing unit generates a conclusion according to the external information and the internal information, and the conclusion comprises a movement speed of agricultural machinery and a steering speed of agricultural machinery; and
a controlling unit, wherein the controlling unit is used to control the movement speed and the steering speed of the agricultural machinery according to the conclusion, to make the agricultural machinery complete the steering at an end of a work channel in a work area, to move to the next work channel.

9. The agricultural machinery automatic turning system of claim 8, wherein when the receiving unit receives a definite turn round command, the processing unit is configured to issue a deceleration command to the controlling unit to slow down the speed of the agricultural machinery to a set value, and then issue a steering command to the controlling unit to change driving direction of the agricultural machinery to a set direction.

10. The agricultural machinery automatic turning system of claim 9, wherein when the agricultural machinery is controlled by the controlling unit to turn, the processing unit is configured to issue an acceleration command to the controlling unit to accelerate the steering of the agricultural machinery.

11. The agricultural machinery automatic turning system of claim 10, wherein the agricultural machinery automatic turning system further comprises a path planning unit, the path planning unit is communicably connected to the receiving unit; the path planning unit determines the work channel according to the two working positions of a walking path of the agricultural machinery in the work area and two ends in the work area.

12. The agricultural machinery automatic turning system of claim 10, wherein the receiving unit is integrated in a terminal device, and the terminal device is used by an operator to operate the agricultural machinery.

13. A terminal device, comprising:
at least one receiving unit; wherein the receiving unit is used to receive external information from an agricultural machinery and internal information of the agricultural machinery;
a processing unit, wherein the processing unit generates a conclusion according to the external information and the internal information, and the conclusion comprises a movement speed of agricultural machinery and a steering speed of agricultural machinery; the processing unit transmits the conclusion to a controlling unit, the controlling unit is used to control the movement speed and the steering speed of the agricultural machinery according to the conclusion, to make the agricultural machinery complete the steering at an end of a work channel in a work area, to move to the next work channel.

14. The terminal device of claim 13, wherein when the receiving unit receives a definite turn round command, the processing unit is configured to issue a deceleration command to the controlling unit to slow down the speed of the agricultural machinery to a set value, and then issue a steering command to the controlling unit to change driving direction of the agricultural machinery to a set direction.

15. The terminal device of claim 14, wherein when the agricultural machinery is controlled by the controlling unit to turn, the processing unit is configured to issue an acceleration command to the controlling unit to accelerate the steering of the agricultural machinery.

16. The terminal device of claim 13, wherein the terminal device further comprises a path planning unit, the path planning unit is communicably connected to the receiving unit; the path planning unit determines the work channel according to the two working positions of a walking path of the agricultural machinery in the work area and two ends in the work area.

17. The terminal device of claim 13, wherein the terminal device further comprises a display unit, the display unit is at least part of the receiving unit, and is used to receive commands from an operator.

18. An agricultural machinery with automatic turning system for agricultural machinery, comprising:
a main body; wherein the main body comprises a walking unit, a driving unit, a steering unit, a working department, and a controlling unit; the working department and the walking unit are respectively connected to the driving unit; the steering unit, the walking unit, the driving unit, and the working department are respectively controllably connected to the controlling unit;
an agricultural machinery automatic turning system, wherein the agricultural machinery automatic turning system comprises a receiving unit and a processing unit; wherein the receiving unit is used to receive external information from an agricultural machinery and internal information of the agricultural machinery; wherein the processing unit generates a conclusion according to the external information and the internal information, and the conclusion comprises a movement speed of agricultural machinery and a steering speed of agricultural machinery; the processing unit transmits the conclusion to a controlling unit, the controlling unit is used to control the movement speed and the steering speed of the agricultural machinery according to the conclusion, to make the agricultural machinery complete the steering at an end of a work channel in a work area, to move to the next work channel.

19. The agricultural machinery of claim 18, wherein when the receiving unit receives a definite turn round command, the processing unit is configured to issue a deceleration command to the controlling unit to slow down the speed of the agricultural machinery to a set value, and then issue a steering command to the controlling unit to change driving direction of the agricultural machinery to a set direction.

20. The agricultural machinery of claim 19, wherein when the agricultural machinery is controlled by the controlling unit to turn, the processing unit is configured to issue an acceleration command to the controlling unit to accelerate the steering of the agricultural machinery.
